(19) **Europäisches Patentamt / European Patent Office / Office européen des brevets**

(11) **EP 1 815 399 B1**

(12) # EUROPEAN PATENT SPECIFICATION

(45) Date of publication and mention of the grant of the patent:
**04.08.2010 Bulletin 2010/31**

(21) Application number: **05807176.2**

(22) Date of filing: **21.11.2005**

(51) Int Cl.:
***G06K 9/62*** (2006.01)

(86) International application number:
**PCT/IB2005/053843**

(87) International publication number:
**WO 2006/054272 (26.05.2006 Gazette 2006/21)**

(54) **A STRATIFICATION METHOD FOR OVERCOMING UNBALANCED CASE NUMBERS IN COMPUTER-AIDED LUNG NODULE FALSE POSITIVE REDUCTION**

STRATIFIKATIONSVERFAHREN ZUR ÜBERWINDUNG UNGLEICHMÄSSIGER FALLANZAHL BEI RECHNERGESTÜTZTER LUNGENKNOTEN-FALSCH-POSITIV-REDUKTION

PROCEDE DE STRATIFICATION PERMETTANT DE RESOUDRE LE PROBLEME DE NOMBRES DE CAS DESEQUILIBRES LORS DE LA REDUCTION DES FAUX POSITIFS DE DETECTION DES NODULES PULMONAIRES ASSISTEE PAR ORDINATEUR

(84) Designated Contracting States:
**AT BE BG CH CY CZ DE DK EE ES FI FR GB GR HU IE IS IT LI LT LU LV MC NL PL PT RO SE SI SK TR**

(30) Priority: **19.11.2004 US 629752 P**

(43) Date of publication of application:
**08.08.2007 Bulletin 2007/32**

(73) Proprietor: **Koninklijke Philips Electronics N.V. 5621 BA Eindhoven (NL)**

(72) Inventors:
- **ZHAO, Luyin
  Briarcliff Manor
  NY 10510-8001 (US)**
- **LEE, Kwok Pun
  Briarcliff Manor
  NY 10510-8001 (US)**
- **BOROCZKY, Lilia
  Briarcliff Manor
  NY 10510-8001 (US)**

(74) Representative: **Schouten, Marcus Maria
  Philips
  Intellectual Property & Standards
  P.O. Box 220
  5600 AE Eindhoven (NL)**

(56) References cited:

- **ENZHE YU ET AL: "GA-SVM wrapper approach for feature subset selection in keystroke dynamics identity verifeation" IJCNN 2003. PROCEEDINGS OF THE INTERNATIONAL JOINT CONFERENCE ON NEURAL NETWORKS 2003. PORTLAND, OR, JULY 20 - 24, 2003, INTERNATIONAL JOINT CONFERENCE ON NEURAL NETWORKS, NEW YORK, NY : IEEE, US, vol. VOL. 4 OF 4, 20 July 2003 (2003-07-20), pages 2253-2257, XP010652457 ISBN: 0-7803-7898-9**
- **ZHANYU GE ET AL: "Computer-aided detection of lung nodules: false positive reduction using a 3D gradient field method" PROCEEDINGS OF THE SPIE - THE INTERNATIONAL SOCIETY FOR OPTICAL ENGINEERING SPIE-INT. SOC. OPT. ENG USA, vol. 5370, no. 1, February 2004 (2004-02), pages 1076-1082, XP002375732 ISSN: 0277-786X**
- **INZA I ET AL: "Gene selection by sequential search wrapper approaches in microarray cancer class prediction" JOURNAL OF INTELLIGENT & FUZZY SYSTEMS IOS PRESS NETHERLANDS, vol. 12, no. 1, 2002, pages 1-13, XP002375733 ISSN: 1064-1246**
- **SUZUKI KENJI ET AL: "Massive training artificial neural network (MTANN) for reduction of false positives in computerized detection of lung nodules in low-dose computed tomography" MEDICAL PHYSICS, AIP, MELVILLE, NY, US, vol. 30, no. 7, July 2003 (2003-07), pages 1602-1617, XP012012134 ISSN: 0094-2405 cited in the application**

## Description

RELATED APPLICATIONS

This application/patent derives from US Provisional Patent Application number 60/629, 751, filed November 19, 2004, by the named applicants. The application is related to commonly-owned, co-pending Philips applications PHUS040505 (779361), PHUS040500 (778964) and PHUS040499 (778965).

The present inventions relate to computer-aided detection systems and methods. The inventions relate more closely to systems and methods for false positive reduction in computer-aided detection (CAD) results, particularly within high-resolution, thin-slice computed tomographic (HRCT) images, using a support vector machine (SVM) to implement post-CAD classification utilizing stratification to unbalanced data sets (training data sets) during CAD system training, resulting in very high specificity (reduction in the number of false positives reported), while maintaining appropriate sensitivity.

The speed and sophistication of current computer-related systems support development of faster, and more sophisticated medical imaging systems. The consequential increase in amounts of data generated for processing, and post-processing, has led to the creation of numerous application programs to automatically analyze the medical image data. That is, various data processing software and systems have been developed in order to assist physicians, clinicians, radiologists, etc., in evaluating medical images to identify and/or diagnose and evaluate medical images. For example, computer-aided detection (CAD) algorithms and systems have developed to automatically identify "suspicious" regions (e.g., lesions) from multi-slice CT (MSCT) scans. CT, or computed tomography, is an imaging modality commonly used to diagnose disease through imaging, in view of its inherent ability to precisely illustrate size, shape and location of anatomical structures, as well as abnormalities or lesions.

CAD systems automatically detect (identify and delineate) morphologically interesting regions (e.g., lesions, nodules, microcalcifications), and other structurally detectable conditions/regions, which might be of clinical relevance. When the medical image is rendered and displayed, the CAD system marks or highlights (identifies) the investigated region. The marks are to draw the attention of the radiologist to the suspected region. For example, in the analysis of a lung image seeking possibly cancerous nodules, the CAD system will mark the nodules detected. As such, CAD systems incorporate the expert knowledge of radiologists to automatically provide a second opinion regarding detection of abnormalities in medical image data. By supporting the early detection of lesions or nodules suspicious for cancer, CAD systems allow for earlier interventions, theoretically leading to better prognosis for patients.

Most existing work for CAD and other machine learning systems follow the same methodology for supervised learning. The CAD system starts with a collection of data with known ground truth. The CAD system is "trained" on the training data to identify a set of features believed to have enough discriminatory power to distinguish the ground truth, i.e., nodule or non-nodule in non-training data. Challenges for those skilled in the art include extracting the features that facilitate discrimination between categories, ideally finding the most relevant sub-set of features within a feature pool. Once trained, the CAD system may then operate on non-training data, where features are extracted from CAD-delineated candidate regions and used for classification.

CAD systems may combine heterogeneous information (e.g. image-based features with patient data), or they may find similarity metrics for example-based approaches. The skilled artisan understands that the accuracy of any computer-driven decision-support system is limited by the availability of the set of patterns already classified by the learning process (i.e., by the training set). False positive markings (output from a CAD system) are those markings which do not point at nodules at all, but at scars, bronchial wall thickenings, motion artifacts, vessel bifurcations, etc. Where a CAD assisted outcome represents a bottom line truth (e.g., nodule) of an investigated region, the clinician would be negligent were he/she to NOT investigate the region more particularly. Those skilled in the art should understand that in a diagnostic context, "true positive" often refers to a detected nodule that is truly malignant. However, in a CAD context, a marker is considered to be a true positive marker even if it points at a benign or calcified nodule. It follows that "true negative" is not defined and a normalized specificity cannot be given in CAD. Accordingly, CAD performance is typically qualified by sensitivity (detection rate) and false positive rate or false positive markings per CT study, and as such, it is quite desirable for a CAD system to output minimal false positives.

After completion of the automated detection processes (with or without marking), most CAD systems automatically invoke one or more tools for application of user- and CAD-detected lesions (regions) to, for example, eliminate redundancies, implement interpretive tools, etc. To that end, various techniques are known for reducing false positives in CAD. For example, W. A.H. Mousa and M. A.U. Khan, disclose their false positive reduction technique entitled: "Lung Nodule Classification Utilizing Support Vector Machines," Proc. of IEEE ICIP'2002. K. Suzuki, S. G. Armato III, F. Li, S. Sone, K. Doi, describe an attempt to minimize false positives in: " Massive training artificial neural network (MTANN) for reduction of false positives in computerized detection of lung nodules in low-dose computed tomography", Med. Physics 30(7), July 2003, pp.1602-1617, as well as Z. Ge, B. Sahiner, H.-P. Chan, L. M. Hadjiski, J. Wei, N. Bogot, P.N. Cascade, E.A. Kazerooni, C. Zhou, " Computer aided detection of lung nodules: false positive reduction using a 3D gradient field method ", Medical Imaging 2004: Image Processing, pp. 1076-1082.

FPR systems are used in post-CAD processing to improve specificity. For example, R. Wiemker, et al., in their COMPUTER-AIDED SEGMENTATION OF PULMONARY NODULES: AUTOMATED VASCULATURE CUTOFF IN THIN- AND THICK-SLICE CT, 2003 Elsevier Science BV, discuss maximizing sensitivity of a CAD algorithm to effectively separate lung nodules from the nodule's surrounding vasculature in thin-slice CT (to remedy the partial volume effect). The intended end is to reduce classification errors. However, the Wiemker CAD systems and methods do not use sophisticated machine learning techniques, nor do they optimize feature extraction and selection methods for FPR. For example, while Mousa, et al., utilize support vector machines to distinguish true lung nodules from non-nodules (FPs), their system is based on a very simplistic feature extraction unit, which may limit rather than improve specificity.

Another known problem is that the number of false nodules generated by CAD algorithms is far more than true nodules (unbalanced case problem), thus lowering the performance of machine learning. The unbalanced training case problem refers to the situation in machine learning where the number of cases in one class is significantly fewer than those in another class. It is well known that such unbalance will cause unexpected behavior for machine learning. One common approach adopted by the machine learning community is to rebalance them artificially. Doing so has been called "up-sampling" (replicating cases from the minority) and "down-sampling" (ignoring cases from the majority). Provost, F. "Learning with Imbalanced Data Sets 101," AAAI 2000.

The unbalanced training case problem is especially salient in lung nodule false positive reduction. However, due to the *biased goal* -maintain true nodules and reduce as many false nodules as possible- instead of seeking for overall classification accuracy (the objective of most other machine learning algorithms). This invention describes a new, stratified method that is specifically suitable for such *biased goal approach* and overcomes the unbalanced case number problem.

It is therefore the object of this invention to provide a CAD-based system and method that realizes a decided improvement in specificity, i.e., false positive reduction, through implementation of a new stratification method, or biased goal approach, for overcoming what is known in the art as the unbalanced case problem. The result is improved specificity in the CAD process.

The inventive CAD and false positive reduction (FPR) systems as disclosed hereby include a machine-learning sub-system, the sub-system for post-CAD processing. The sub-system comprises a feature extractor, genetic algorithm (GA) for selecting the most relevant features, and support vector machine (SVM). The SVM qualifies candidate regions detected by CAD as to some ground truth fact, e.g., whether a region/volume is indeed a nodule or non-nodule, under the constraint that all true positive identifications are retained. First the CAD or FPR system must be trained on a set of training data, which includes deriving the most relevant features for use by the post-CAD machine learning SVM to classify with improved CAD specificity.

Fig. 1 is a diagram depicting a system for false positive reduction (FPR) in computer-aided detection (CAD) from Computed Tomography (CT) medical images using support vector machines (SVMs);
Fig. 2 is a diagram depicting the basic idea of a support vector machine;
Fig. 3 is a process flow diagram identifying an exemplary process of the inventions;

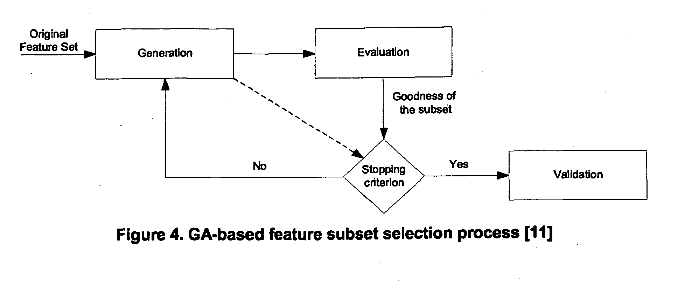

Fig. 4 depicts a GA-based feature subset selection process; and
Figs. 5 is a system level diagram which highlights the stratified method for lung nodule false positive reduction; and
Fig. 6 provides a statistical analysis of detected false nodules, depending on nodule size.

The underlying goal of computer assistance in detecting lung nodules in image data sets (e.g., CT) is not to designate the diagnosis by a machine, but rather to realize a machine-based algorithm or method to support the radiologist in rendering his/her decision, i.e., pointing to locations of suspicious objects so that the overall sensitivity (detection rate) is raised. The principal problem with CAD or other clinical decision support systems is that inevitably false markers (so called false positives) come with the true positive marks.

Clinical studies support that measured CAD detection rates, as distinguished from measured rates of detection by trained radiologists depend on the number of reading radiologists. The more trained readers that participate in reading of suspicious lesions, microcalcifications, etc., the larger the number of lesions (within an image), which will be found. Those skilled in the art should note that any figures depicting absolute sensitivity, whether reading by CAD or skilled practitioner, may be readily misinterpreted. That is, data from clinical studies tend to support that a significant number of nodules are more readily detectable by additional CAD software, that were overlooked by reading radiologists without a CAD system. The present inventions provide for increased specificity (better FPR), while maintaining sensitivity (true nodule findings).

CAD-based systems that include false positive reduction processes, such as those described by Wiemker, Mousa, et al., etc., have one big job and that is to identify "actionable" structures detected in medical image data. Once identified (i.e., segmented), a comprehensive set of significant features is extracted and used to classify. Those skilled in the art will recognize that the accuracy of computer driven decision support, or CAD systems, is limited by the availability of a set of patterns or regions of known pathology used as the training set. Even state-of-the-art CAD algorithms, such as described by

Wiemker, R., T. Blaffert[1], can result in high numbers of false positives, leading to unnecessary interventions with associated risks and low user acceptance. Moreover, current false positive reduction algorithms often were developed for chest radiograph images or thick slice CT scans, and do not necessarily perform well on data originated from HRCT. [1] *Options to improve the performance of the computer aided detection of lung nodules in thin-slice CT.* 2003, Philips Research Laboratories: Hamburg, and by Wiemker, R., T. Blaffert, in their. *Computer Aided Tumor Volumetry in CT Data, Invention disclosure.* 2002, Philips Research, Hamburg

To that end, the inventive CAD/FPR systems and methods include a CAD sub-system or process to identify candidate regions, and segment the regions. During training, the segmented regions within the set of training data are passed to a feature extractor, or a processor implementing a feature extraction process. The inventions address the problem known in the art as the biased goal problem, or unbalanced data set problem by implementation of the stratification method described in detail below. Feature extraction obtains a feature pool consisting of 3D and 2D features from the detected structures. The feature pool is passed to a genetic algorithm (GA) sub-system, or GA processor (post CAD), which processes the feature pool to realize an optimal feature subset. An optimal feature subset includes those features that provide sufficient discriminatory power for the SVM, within the inventive CAD or FPR system, to classify the candidate regions/volumes.

Thereafter, the CAD processes "new" image data, segmenting candidate regions found in non-training data. The sub-set of features (as determined during training) is extracted from the candidate regions, and used by the "trained" classifier (SVM) to decide whether the features of the candidate allow proper classification with proper specificity. The inventive FPR or CAD systems are able to thereby accurately, and with sufficient specificity, detect small lung nodules in high resolution and thin slice CT (HRCT), similar in feature to those comprising the training set, and including the new and novel 3D-based features. For example, HRCT data with slice thickness <= 1 mm provides data in sufficient detail that allows for detection of very small nodules. The ability to detect smaller nodules requires new approaches to reliably detect and discriminate candidate regions, as set forth in the claims hereinafter.

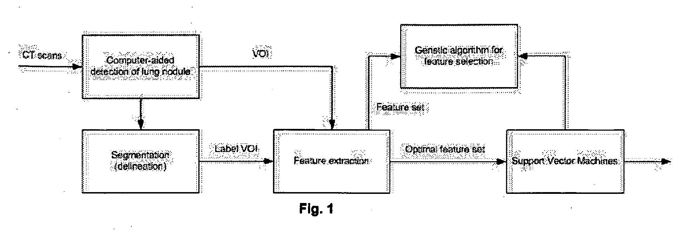

A preferred embodiment of an FPR system 400 of the invention will be described broadly with reference to Fig. 1. FPR system 400 includes a CAD sub-system 420, for identifying and segmenting regions or volumes of interest that meet particular criteria, and an FPR sub-system 430. Preferably, the CAD sub-system 420 includes a CAD processor 410, and may further include a segmenting unit 430, to perform low level processing on medical image data, and segmenting same. Those skilled in the art will understand that CAD systems must perform a segmenting function to delineate candidate regions for further analysis, whether the segmenting function is implemented as a CAD sub-system, or as a separate segmenting unit, to support the CAD process (such as segmenting unit 430). The CAD sub-system 420 provides for the segmenting of candidate regions or volumes of interest, e.g., nodules, whether operating on training data or investigating "new" candidate regions, and guides the parameter adjustment process to realize a stable segmentation.

In training mode, feature extraction is crucial as it greatly influences the overall performance of the FPR system. Without proper extraction of the entire set or pool of features, the GA processor 450 may not accurately determine an optimal feature sub-set with the best discriminatory power and the smallest size (in order to avoid over-fitting and increase generalizability). A pool of features is extracted or generated by a feature extraction unit 440, comprising the FPR sub-system 430. The pool of features is then operated upon by a Genetic Algorithm processor 450, to identify a "best" sub-set of the pool of features. The intent behind the GA processing is to maximize the specificity to the ground truth by the trained CAD system, as predicted by an SVM 460, when using the feature sub-sets to operate upon non-training data. That is, GA processor 450 generates or identifies a sub-set of features, which when used by the SVM after training, increase specificity in the identification of regions in the segmented non-training data. The GA-identified sub-set of features is determined (during training only) with respect to both the choice of and number of features that should be utilized by the SVM with sufficient specificity to minimize false positive identifications when used on non-training data. That is, once trained, the CAD system no longer uses the GA when the system operates on non-raining data.

A GA-based feature selection process is taught by commonly owned, co-pending Philips application number US040120 (ID disclosure # 779446), the contents of which are incorporated by reference herein. The GA's feature subset selection is initiated by creating a number of "chromosomes" that consist of multiple "genes". Each gene represents a selected feature. The set of features represented by a chromosome is used to train an SVM on the training data. The fitness of the chromosome is evaluated by how well the resulting SVM performs. In this invention, there are three fitness functions used: sensitivity, specificity, and number of features included in a chromosome. The three fitness functions are ordered with different priorities; in other words, sensitivity has 1st priority, specificity 2nd, and number of features the 3rd. This is called a hierarchical fitness function. At the start of this process, a population of chromosomes is generated by randomly selecting features to form the chromosomes. The algorithm (i.e., the GA) then iteratively searches for those chromosomes that perform well (high fitness).

At each generation, the GA evaluates the fitness of each chromosome in the population and, through two main evolutionary operations, mutation and crossover, creates new chromosomes from the current ones. Genes that are in "good" chromosomes are more likely to be retained for the next generation and those with poor performance are more likely to be discarded. Eventually an optimal solution (i.e., a collection of features) is found through this process of survival of the fittest. And by knowing the best feature subset, including the best number of features to realize false positive reduction (FPR) that reduces the total number of misclassified cases. After the feature subset is determined, it is used to train an SVM.

As mentioned above, the unbalanced training case problem refers to the situation in machine learning where the number of cases in one class is significantly fewer than those in another class. It is well known that such unbalance will cause unexpected behavior for machine learning. One common approach adopted by the machine learning community is to rebalance them artificially using "up-sampling" (replicating cases from the minority) and "down-sampling" (ignoring cases from the majority). Provost, F. "Learning with Imbalanced Data Sets 101," AAAI 2000. The novel stratified method as taught and claimed hereby is specifically suitable for addressing the *biased goal approach* and overcoming the unbalanced case number problem.

After training, CAD sub-system 420 delineates the candidate nodules (including non-nodules found in the non-training data) from the background by generating a binary or trinary image, where nodule-, background- and lung-wall (or "cut-out") regions are labeled. Upon receipt of the gray-level and labeled candidate region or volume, the feature extractor 440 calculates (extracts) any relevant features, such as 2D and 3D shape features, histogram-based features, etc., as a pool of features. The features are provided to the SVM, which already trained on the optimized feature sub-sets extracted from training data.

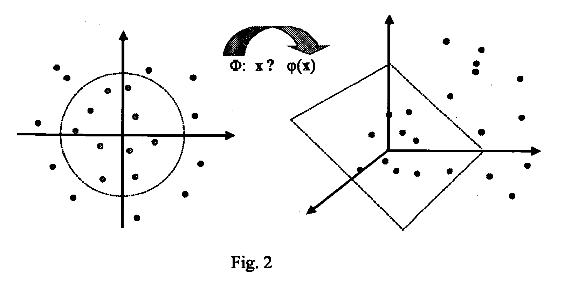

Those skilled in the art should understand that SVMs map "original" feature space to some higher-dimensional feature space, where the training set is separable by a hyperplane, as shown in Fig. 2. The SVM-based classifier has several internal parameters, which may affect its performance. Such parameters are optimized empirically to achieve the best possible overall accuracy. Moreover, the feature values are normalized before being used by the SVM to avoid domination of features with large numeric ranges over those having smaller numeric ranges, which is the focus of the inventive system and processes taught hereby. Normalized feature values also render calculations simpler. And because kernel values usually depend on the inner products of feature vectors, large attribute values might cause numerical problems. The scaling to the range of [0,1] is done as

$$x' = (x - mi)/(Mi - mi),$$

where,

x' is the "scaled" value;
x is the original value;
Mi is the maximum feature value; and
mi is the minimum feature value.

The inventive FPR system was validated using a lung nodule dataset that included training data or regions whose pathology is known, utilizing what may be referred to as a "leave-one-out and k-fold validation". The validation was implemented and the inventive FPR system was shown to reduce the majority of false nodules while virtually retaining all true nodules.

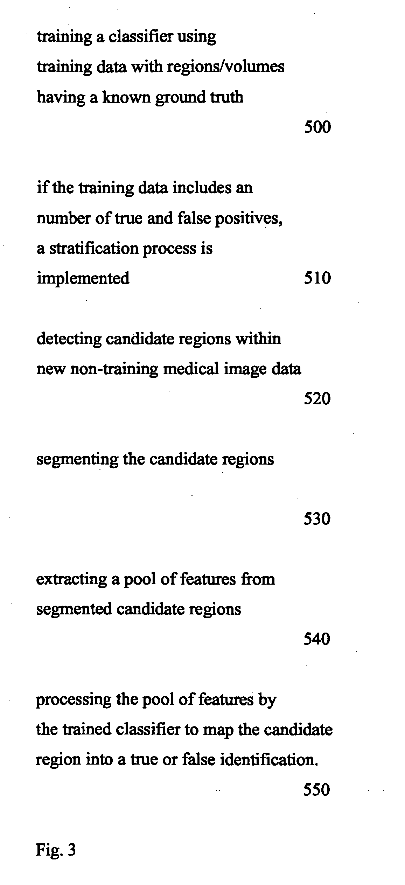

Fig. 3 is a flow diagram depicting a process, which may be implemented in accordance with the present invention. In Fig. 3, box 500 represents training a classifier on a set of medical image training data for which a clinical ground truth about particular regions or volumes of interest is known. The step may include training a classifier on a set of medical image training data selected to include a number of true and false nodules. and automatically segmented. A feature pool is identified/ extracted from each segmented region and volume within the training data, and processed by genetic algorithm processor to identify an optimal feature subset, upon which the support vector machine is trained. It is here that the stratified method for lung nodule false positive reduction is implemented.

Box 510 represents a step wherein if the training data includes an unbalanced number of true and false positives, a stratification process is implemented. Box 520 represents a post-training step of detecting, within new or non-training medical image data, the regions or volumes that are candidates for identification as to the ground truth, e.g., nodules or non-nodules. Box 530 represents the step of segmenting the candidate regions, and Box 540 represents the step of processing the segmented candidate regions to extract those features, i.e., the sub-set of features, determined by the GA to be the most relevant features for proper classification. Then, as shown in block 550, the support vector machine identifies the true positive identifications of non-training candidate regions with improved specificity, and maintaining sensitivity.

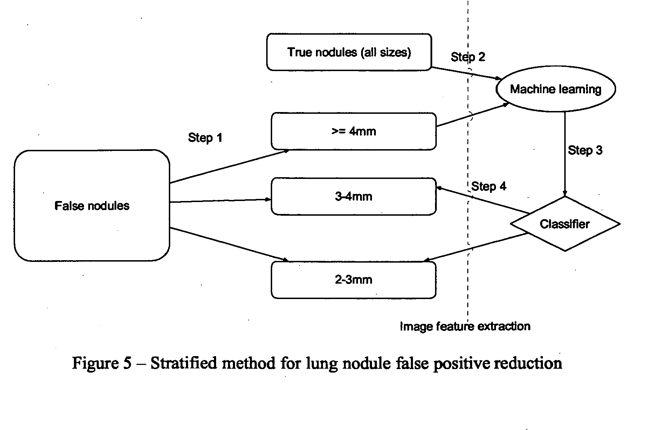

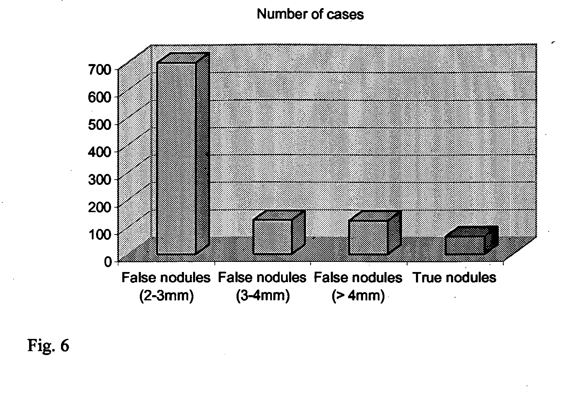

For that matter, as shown in box 510, a detailed description for the method illustrated in Fig. 5, where step 1 shows that the false nodule set is divided into three subsets based on nodule size. The case number distribution is shown below in the statistical analysis as seen in the table identified as "Number of cases" within Fig. 6.

In step 2, machine learning uses the largest false nodules (e.g. >4mm) and all true nodules. The first reason for choosing the largest false nodules is the comparable number of cases as true nodules. The second reason is that image features extracted from large false nodules are believed to be more discriminative. The specific machine learning technique we use is Support Vector Machines (SVMs).

In step 3, a classifier is generated based on machine learning. Since the case numbers in both classes are comparable, the classifier is able to retain almost all true nodules and reduce close to 90% of the large false nodules after applying different cross-validation methods.

In step 4, the classifier mentioned in Step 3 is applied to the remaining smaller false nodules and the result shows that more than half of the false nodules are removed. Overall, the stratified approach proves to be a good method to overcome the unbalanced case problem. For *biased goal problems* because it first ensures as many true nodules are retained (first priority), then reduces false nodules (second priority). Therefore, this approach differs from other approaches to solve unbalanced data set problems that seek to raise the overall classification accuracy, i.e. same priority on reducing misclassified cases for both sides. It is specifically useful for such biased goal problems as lung nodule false positive reduction.

It is significant to note that software required to perform the inventive methods, or which drives the inventive FPR classifier, may comprise an ordered listing of executable instructions for implementing logical functions. As such, the software can be embodied in any computer-readable medium for use by or in connection with an instruction execution system, apparatus, or device, such as a computer-based system, processor-containing system, or other system that can fetch the instructions from the instruction execution system, apparatus, or device and execute the instructions. In the context of this document, a "computer-readable medium" can be any means that can contain, store, communicate, propagate, or transport the program for use by or in connection with the instruction execution system, apparatus, or device.

The computer readable medium can be, for example but not limited to, an electronic, magnetic, optical, electromagnetic, infrared, or semiconductor system, apparatus, device, or propagation medium. More specific examples (a non-exhaustive list) of the computer-readable medium would include the following: an electrical connection (electronic) having one or more wires, a portable computer diskette (magnetic), a random access memory (RAM) (magnetic), a read-only memory (ROM) (magnetic), an erasable programmable read-only memory (EPROM or Flash memory) (magnetic), an optical fiber (optical), and a portable compact disc read-only memory (CDROM) (optical). Note that the computer-readable medium could even be paper or another suitable medium upon which the program is printed, as the program can be electronically captured, via for instance optical scanning of the paper or other medium, then compiled, interpreted or otherwise processed in a suitable manner if necessary, and then stored in a computer memory.

It should be emphasized that the above-described embodiments of the present invention, particularly, any "preferred" embodiment(s), are merely possible examples of implementations that are merely set forth for a clear understanding of the principles of the invention. Furthermore, many variations and modifications may be made to the above-described embodiments of the invention without departing substantially from the spirit and principles of the invention. All such modifications and variations are intended to be taught by the present disclosure, included within the scope of the present invention, and protected by the following claims.

**Claims**

1. A method for training a classifier for the classification of regions or volumes of interest, referred to hereinafter as "regions", detected within medical imaging data, for false positive reduction in computer-aided detection (CAD) results, where the training includes choosing data to train the classifier in accordance with a stratification method, the stratification method comprising:

    separating the pool of false positive regions into a plurality ofN subsets based on region size, such that the Nth subset includes the largest regions, the number of the largest regions being comparable to the number of true regions; implementing a machine learning process using the Nth subset and all true regions; and generating the classifier based on the machine learning.

2. The method as set forth in claim 1, the stratification method further comprising applying the classifier to each of the remaining N-1 subsets.

3. The method as set forth in claim 1, further adapted for maximizing specificity and reducing the number of false positives reported after processing non-training data, comprising, during a training phase, the steps of:

    identifying and segmenting the regions in a set of medical image training data using computer-assisted detection processing, wherein a clinical ground truth about particular regions is known for the set of medical image training data, wherein the set of medical image training data is selected to include a number of regions known to be true and a number of regions known to be false according to the ground truth, extracting features from the identified and segmented regions to create a pool of features to qualify the regions,
applying machine learning to the pool of features to determine a minimal sub-set of features from the pool of features of the regions used in training, wherein the minimal sub-set of features is for use by the classifier to classify regions within non-training data with improved specificity, wherein if the medical image training data is unbalanced in that a number of regions or volumes of interest in one ground truth class is significantly smaller than a number of regions or volumes of interest in another ground truth class, implementing the stratification method to the medical image training data; and
training the classifier on the rebalanced training data using the minimal sub-set of features.

4. The method as set forth in claim 3, further comprising, after training:

detecting, within non-training data, candidate regions;
segmenting the candidate regions identified within the non-training data; extracting a set of candidate features relating to each segmented candidate region; and mapping candidate regions into ground truth space based on the set of candidate features with practical specificity in accord with the training process.

5. The method as set forth in claim 3, wherein the step of applying machine learning comprises applying a genetic algorithmic processor.

6. The method as set forth in claim 1, 3, or 5, wherein the classifier is a support vector machine.

7. The method as set forth in claim 1, wherein the stratification method comprises using the largest false nodules and all true nodules.

8. The method as set forth in claim 3, wherein the training phase further includes determining both the size of the sub-set of features optimized by the machine learning during training, for each candidate region in the training data, and the actual features comprising the sub-sets.

9. The method as set forth in claim 3, wherein the training phase further includes defining a pool of features identified within each region within the training data as a chromosome, where each gene represents a feature, and where the genetic algorithm initially populates the chromosomes by random selection of features, and iteratively searches for those chromosomes that have higher fitness, wherein the evaluation is repeated for each generation, and using mutation and crossover, generates new and more fit chromosomes during the training phase.

10. The method as set forth in claim 9, wherein the determining includes applying the machine learning in two phases, including:

a.) identifying each chromosome as to both its set of features, and the number of features; and
b.) analyzing, for each chromosome, the identified set of features, and the identified number of features, to determine the optimal size of the feature based on the number of occurrences of different chromosomes and the number of average errors.

11. The method as set forth in claim 3, wherein the training phase includes identifying wall pixels utilizing filter masks.

12. The method as set forth in claim 1 or 3, wherein if the data is unbalanced such that the number of false nodules is much greater than the number of true nodules, the stratification process chooses a number of false nodules based on a criteria such that the number of false nodule and true nodules is balanced.

13. A computer readable medium comprising a set of computer readable instructions, which upon downloading to a general purpose computer, implements a method as set forth in claim 1.

14. A system for training a classifier for the classification of regions or volumes of interest, referred to hereinafter as "regions", detected within medical imaging data, for false positive reduction in computer-aided detection (CAD) results, the system comprising stratification means for choosing data to train the classifier, the stratification means comprising:

means for separating the pool of false positive regions into a plurality of N subsets based on region size, such that the Nth subset includes the largest regions, the number of the largest regions being comparable to the number of true regions;
means for implementing a machine learning process using the Nth subset and all true regions; and
means for generating the classifier based on the machine learning.

15. A computer program product comprising instructions for causing a processor-containing system to perform the method according to claim 1.

**Patentansprüche**

1. Verfahren zum Trainieren eines Klassifikators für die Klassifizierung von innerhalb medizinischer Bildgebungsdaten detektierten interessierenden Regionen oder Volumina, im Folgenden als "Regionen" bezeichnet, zur Falsch-Positiv-Reduzierung in rechnergestützten Ergebnissen, wobei das Trainieren das Auswählen von Daten zum Trainieren des Klassifikators in Übereinstimmung mit einem Stratifikationsverfahren beinhaltet, wobei das Stratifikationsverfahren Folgendes umfasst:

   Auftrennen des Pools von Falsch-Positiv-Regionen in eine Vielzahl von N Untergruppen basierend auf der Regionsgröße, so dass die N-te Untergruppe die größten Regionen beinhaltet, wobei die Anzahl der größten Regionen mit der Anzahl der wahren Regionen vergleichbar ist; Implementieren eines Maschinenlernprozesses unter Verwendung der N-ten Untergruppe und aller wahren Regionen; und Erzeugen des Klassifikators basierend auf dem Maschinenlernen.

2. Verfahren nach Anspruch 1, wobei das Stratifikationsverfahren weiterhin das Anwenden des Klassifikators auf jede der verbleibenden N-1 Untergruppen umfasst.

3. Verfahren nach Anspruch 1, weiterhin vorgesehen, um die Spezifität zu maximieren und die Anzahl der nach der Verarbeitung der Nicht-Training-Daten gemeldeten Falsch-Positiven zu reduzieren, wobei das Verfahren während einer Trainingsphase die folgenden Schritte umfasst:

   Identifizieren und Segmentieren der Regionen in einer Gruppe von Trainingsdaten für das medizinische Bild mit Hilfe rechnergestützter Detektionsverarbeitung, wobei eine klinische Bodenwahrheit (engl. ground truth) zu bestimmten Regionen für die Gruppe von Trainingsdaten für das medizinische Bild bekannt ist, wobei die Gruppe von Trainingsdaten für das medizinische Bild derart ausgewählt wird, dass sie eine Anzahl von als wahr bekannten Regionen und eine Anzahl von als falsch bekannten Regionen gemäß der Bodenwahrheit beinhaltet, Extrahieren von Merkmalen aus den identifizierten und segmentierten Regionen, um ein Merkmalspool zur Qualifizierung der Regionen zu schaffen, Anwenden des Maschinenlernens auf den Merkmalspool, um eine minimale Untergruppe von Merkmalen aus dem im Training verwendeten Merkmalspool der Regionen zu bestimmen, wobei die minimale Untergruppe von Merkmalen für die Verwendung durch den Klassifikator vorgesehen ist, um Regionen innerhalb von Nicht-Trainingsdaten mit verbesserter Spezifität zu klassifizieren,
   wobei, wenn die Trainingsdaten für das medizinische Bild dahingehend ungleichmäßig sind, dass eine Anzahl von interessierenden Regionen oder Volumina in einer Bodenwahrheitsklasse wesentlich kleiner ist als eine Anzahl von interessierenden Regionen oder Volumina in einer anderen Bodenwahrheitsklasse, Implementieren des Stratifikationsverfahrens für die Trainingsdaten für das medizinische Bild; und Trainieren des Klassifikators auf die wieder gleichmäßigen Trainingsdaten mit Hilfe der minimalen Untergruppe von Merkmalen.

4. Verfahren nach Anspruch 3, das weiterhin Folgendes nach dem Training umfasst:

   innerhalb von Nicht-Training-Daten Detektieren von in Frage kommenden Regionen; Segmentieren der innerhalb der Nicht-Training-Daten identifizierten in Frage kommenden Regionen; Extrahieren einer Gruppe von in Frage kommenden Merkmalen in Bezug auf jede segmentierte in Frage kommende Region; und Abbilden von in Frage kommenden Regionen in den Bodenwahrheit-Raum basierend auf der Gruppe von in Frage kommenden Merkmalen mit praktischer Spezifität gemäß dem Trainingsprozess.

5. Verfahren nach Anspruch 3, wobei der Schritt des Anwendens des Maschinenlernens das Anwenden eines genetischen Algorithmus-Prozessors umfasst.

6. Verfahren nach Anspruch 1, 3 oder 5, wobei der Klassifikator eine Unterstützungsvektormaschine ist.

7. Verfahren nach Anspruch 1, wobei das Stratifikationsverfahren die Nutzung der größten Falsch-Knoten und aller Wahr-Knoten umfasst.

8. Verfahren nach Anspruch 3, wobei die Trainingsphase weiterhin das Bestimmen von sowohl der Größe der Untergruppe von Merkmalen optimiert durch das Maschinenlernen während des Trainings für jede in Frage kommende Region in den Trainingsdaten als auch die eigentlichen Merkmale, welche die Untergruppen enthalten, beinhaltet.

9. Verfahren nach Anspruch 3, wobei die Trainingsphase weiterhin das Definieren eines Pools von Merkmalen beinhaltet, die innerhalb jeder Region innerhalb der Trainingsdaten als ein Chromosom identifiziert wurden, wobei jedes Gen ein Merkmal darstellt, und wobei der genetische Algorithmus die Chromosomen anfangs durch Zufallsauswahl von Merkmalen bevölkert, und iterativ nach denjenigen Chromosomen mit höherer Eignung sucht, wobei die Evaluierung für jede Generation wiederholt wird, und mithilfe von Mutation und Crossover neue und besser angepasste Chromosomen während der Trainingsphase erzeugt.

10. Verfahren nach Anspruch 9, wobei das Bestimmen das Anwenden des Maschinenlernens in zwei Phasen umfasst, beinhaltend:

    a) das Identifizieren jedes Chromosoms hinsichtlich sowohl seiner Gruppe von Merkmalen als auch der Anzahl von Merkmalen; und
    b) Analysieren - für jedes Chromosom - der identifizierten Gruppe von Merkmalen, und der identifizierten Anzahl von Merkmalen, um die optimale Größe des Merkmals basierend auf der Anzahl des Auftretens verschiedener Chromosomen und der Anzahl von durchschnittlichen Fehlern zu bestimmen.

11. Verfahren nach Anspruch 3, wobei die Trainingsphase das Identifizieren von Wandpixeln mit Hilfe von Filtermasken umfasst.

12. Verfahren nach Anspruch 1 oder 3, wobei - wenn die Daten ungleichmäßig sind, so dass die Anzahl von falschen Knoten wesentlich größer ist als die Anzahl von wahren Knoten - der Stratifikationsprozess eine Anzahl von falschen Knoten basierend auf einem Kriterium so wählt, dass die Anzahl von falschen Knoten und wahren Knoten ausgeglichen ist.

13. Computerlesbares Medium mit einer Gruppe von computerlesbaren Anweisungen, die beim Herunterladen auf einen universellen Computer ein Verfahren nach Anspruch 1 implementiert.

14. System zum Trainieren eines Klassifikators für die Klassifizierung von innerhalb medizinischer Bildgebungsdaten detektierten interessierenden Regionen oder Volumina, im Folgenden als "Regionen" bezeichnet, zur Falsch-Positiv-Reduzierung in rechnergestützten Ergebnissen, wobei das System Stratifikationsmittel zum Auswählen von Daten zum Trainieren des Klassifikators umfasst, wobei das Stratifikationsmittel Folgendes umfasst:

    Mittel zum Auftrennen des Pools von Falsch-Positiv-Regionen in eine Vielzahl von N Untergruppen basierend auf der Regionsgröße, so dass die N-te Untergruppe die größten Regionen beinhaltet, wobei die Anzahl der größten Regionen mit der Anzahl der wahren Regionen vergleichbar ist;
Mittel zum Implementieren eines Maschinenlernprozesses unter Verwendung der N-ten Untergruppe und aller wahren Regionen; und
Mittel zum Erzeugen des Klassifikators basierend auf dem Maschinenlernen.

15. Computerprogrammprodukt mit Anweisungen zum Veranlassen eines einen Prozessor enthaltenden Systems zum Durchführen des Verfahrens nach Anspruch 1.

**Revendications**

1. Procédé de formation d'un classificateur pour la classification de régions ou de volumes intéressants, appelées ci-dessous « régions », détectées dans des données d'imagerie médicale, pour la réduction des faux positifs dans les résultats de la détection assistée par ordinateur (DAO), la formation comprenant la sélection des données pour former le classificateur selon un procédé de stratification, ledit procédé de stratification comprenant :

    la séparation du groupe de régions de faux positif en une pluralité de N sous-ensembles sur la base de la taille de la région, de telle sorte que le Nième sous-ensemble comprenne les plus grandes régions, le nombre des plus grandes régions étant comparable au nombre de vraies régions ;
    la mise en oeuvre d'un procédé d'apprentissage machine en utilisant le Nième sous-ensemble et toutes les vraies régions ; et
    la génération du classificateur sur la base de l'apprentissage machine.

2. Procédé selon la revendication 1, le procédé de stratification comprenant également l'application du classificateur à chacun des N-1 sous-ensembles restants.

3. Procédé selon la revendication 1, également adapté pour optimiser la spécificité et réduire le nombre de faux positifs rapportés après le traitement des données ne concernant pas la formation, comprenant, pendant une phase de formation, les étapes consistant à :

    identifier et segmenter les régions dans un ensemble de données de formation d'image médicale en utilisant un traitement de détection assistée par ordinateur, dans lequel une réalité de terrain clinique est connue à propos de régions particulières pour l'ensemble de données de formation d'image médicale, dans lequel l'ensemble de données de formation d'image médicale est sélectionné pour comprendre un nombre de régions connu comme étant vrai et un nombre de régions connu comme étant faux selon la réalité de terrain,

extraire des caractéristiques des régions identifiées et segmentées pour créer un ensemble de caractéristiques pour qualifier les régions,

appliquer l'apprentissage machine à l'ensemble de caractéristiques pour déterminer un sous-ensemble minimal de caractéristiques à partir de l'ensemble de caractéristiques des régions utilisées dans la formation, dans lequel le sous-ensemble minimal de caractéristiques est utilisé par le classificateur pour classifier les régions dans les données ne concernant pas la formation avec une spécificité améliorée,

dans lequel, si les données de formation d'image médicale sont déséquilibrées étant donné qu'un nombre de régions ou de volumes intéressants dans une classe de réalité de terrain est significativement inférieur à un nombre de régions ou volumes intéressants dans une autre classe de réalité de terrain, mettre en oeuvre le procédé de stratification des données de formation de l'image médicale ; et

former le classificateur sur les données de formation rééquilibrées en utilisant le sous-ensemble minimal de caractéristiques.

4. Procédé selon la revendication 3, comprenant également, après la formation :

la détection de régions candidates dans les données ne concernant pas la formation ;

la segmentation des régions candidates identifiées dans les données ne concernant pas la formation ;

l'extraction d'un ensemble de caractéristiques candidates liées à chaque région candidate segmentée ; et

la cartographie des régions candidates dans l'espace de la réalité de terrain sur la base de l'ensemble de caractéristiques candidates avec une spécificité pratique selon le procédé de formation.

5. Procédé selon la revendication 3, dans lequel l'étape d'application de l'apprentissage machine comprend l'application d'un processeur algorithmique génétique.

6. Procédé selon l'une quelconque des revendications 1, 3 ou 5, dans lequel le classificateur est une machine vectorielle de support.

7. Procédé selon la revendication 1, dans lequel le procédé de stratification comprend l'utilisation des modules faux les plus grands et de tous les modules vrais.

8. Procédé selon la revendication 3, dans lequel la phase de formation comprend également la détermination de la taille du sous-ensemble de caractéristiques optimisée par l'apprentissage machine pendant la formation, pour chaque région candidate dans les données de formation, et des caractéristiques réelles comprenant les sous-ensembles.

9. Procédé selon la revendication 3, dans lequel la phase de formation comprend également la définition d'un ensemble de caractéristiques identifiées dans chaque région dans les données de formation comme un chromosome, chaque gène représentant une caractéristique, et l'algorithme génétique populant initialement les chromosomes par une sélection aléatoire des caractéristiques, et recherchant de façon itérative les chromosomes étant le mieux adaptés, l'évaluation étant répétée pour chaque génération, et en utilisant la mutation et le croisement, générant de nouveaux chromosomes plus adaptés pendant la phase de formation.

10. Procédé selon la revendication 9, dans lequel la détermination comprend l'application de l'apprentissage machine en deux phases, comprenant :

a) l'identification de chaque chromosome en ce qui concerne à la fois son ensemble de caractéristiques et le nombre de caractéristiques ; et
b) l'analyse pour chaque chromosome de l'ensemble de caractéristiques identifiées, et du nombre de caractéristiques identifiées, pour déterminer la taille optimale de la caractéristique sur la base du nombre d'occurrences des différents chromosomes et du nombre d'erreurs moyennes.

11. Procédé selon la revendication 3, dans lequel la phase de formation comprend l'identification des pixels de paroi en utilisant des masques de filtre.

12. Procédé selon l'une quelconque des revendications 1 ou 3, dans lequel si les données sont déséquilibrées de telle sorte que le nombre de faux nodules soit beaucoup plus grand que le nombre de vrais nodules, le procédé de stratification choisit un nombre de faux nodules basé sur un critère tel que le nombre de faux nodules et de vrais nodules soit équilibré.

13. Support lisible par un ordinateur comprenant un ensemble d'instructions lisibles par un ordinateur, qui au téléchargement sur un ordinateur d'usage général met en oeuvre un procédé selon la revendication 1.

**14.** Système pour former un classificateur pour la classification de régions ou volumes intéressants, appelés ci-dessous « régions », détectés dans des données d'imagerie médicale, pour la réduction des faux positifs dans les résultats de la détection assistée par ordinateur (DAO), le système comprenant un moyen de stratification pour choisir des données pour former le classificateur, le moyen de stratification comprenant :

un moyen pour séparer le groupe de régions de faux positif en une pluralité de N sous-ensembles sur la base de la taille de la région, de telle sorte que le Nième sous-ensemble comprenne les plus grandes régions, le nombre des plus grandes régions étant comparable au nombre de vraies régions ;
un moyen pour mettre en oeuvre un procédé d'apprentissage machine en utilisant le Nième sous-ensemble et toutes les vraies régions ; et
un moyen pour générer le classificateur sur la base de l'apprentissage machine.

**15.** Produit de programme informatique comprenant des instructions pour qu'un système contenant un processeur réalise le procédé selon la revendication 1.

**Fig. 1**

Fig. 2

training a classifier using
training data with regions/volumes
having a known ground truth

500

if the training data includes an
number of true and false positives,
a stratification process is
implemented

510

detecting candidate regions within
new non-training medical image data

520

segmenting the candidate regions

530

extracting a pool of features from
segmented candidate regions

540

processing the pool of features by
the trained classifier to map the candidate
region into a true or false identification.

550

Fig. 3

**Figure 4. GA-based feature subset selection process [11]**

Figure 5 – Stratified method for lung nodule false positive reduction

Fig. 6

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 60629751 A

- US 040120 A

### Non-patent literature cited in the description

- **W. A.H. Mousa ; M. A.U. Khan.** Lung Nodule Classification Utilizing Support Vector Machines. *Proc. of IEEE ICIP'2002,* 2002
- **K. Suzuki ; S. G. Armato III ; F. Li ; S. Sone ; K. Doi.** Massive training artificial neural network (MTANN) for reduction of false positives in computerized detection of lung nodules in low-dose computed tomography. *Med. Physics,* July 2003, vol. 30 (7), 1602-1617

- **Z. Ge ; B. Sahiner ; H.-P. Chan ; L. M. Hadjiski ; J. Wei ; N. Bogot ; P.N. Cascade ; E.A. Kazerooni ; C. Zhou.** Computer aided detection of lung nodules: false positive reduction using a 3D gradient field method. *Medical Imaging 2004: Image Processing,* 2004, 1076-1082
- **R. Wiemker et al.** COMPUTER-AIDED SEGMENTATION OF PULMONARY NODULES: AUTOMATED VASCULATURE CUTOFF IN THIN- AND THICK-SLICE CT. Elsevier Science, 2003
- **Provost, F.** Learning with Imbalanced Data Sets 101. *AAAI,* 2000